# EUROPÄISCHE PATENTSCHRIFT

(11) **EP 2 957 442 B1**
(45) Veröffentlichungstag und Bekanntmachung des Hinweises auf die Patenterteilung: **11.11.2020**
(21) Anmeldenummer: 15170201.6
(22) Anmeldetag: 02.06.2015
(51) Int. Cl.: B60G 17/052, B60G 17/056, F16K 11/074

(54) **LUFTFEDERUNGSEINRICHTUNG ZUM HEBEN UND SENKEN EINES FAHRZEUGAUFBAUS**
PNEUMATIC SUSPENSION UNIT FOR LIFTING AND LOWERING A VEHICLE STRUCTURE
INSTALLATION DE RESSORT PNEUMATIQUE DESTINÉE À LEVER ET À ABAISSER UNE CAISSE DE VÉHICULE

(30) Priorität: 18.06.2014 DE 102014108557
(43) Veröffentlichungstag der Anmeldung: 23.12.2015
(73) Patentinhaber: KNORR-BREMSE Systeme für Nutzfahrzeuge GmbH, 80809 München (DE)
(72) Erfinder: Kantor, Kornel, 6000 Kecskemét (HU); Toth, Janos, 6000 Kecskemét (HU); Toth, Tamas, 6000 Kecskemet (HU); Voith, Andras, 1183 Budapest (HU)

(56) Entgegenhaltungen:
- EP-A1- 2 070 741
- EP-A1- 2 263 892
- EP-A1- 2 540 536
- EP-A1- 2 540 537
- EP-A2- 0 435 587
- WO-A1-2011/076302
- WO-A1-2011/124726
- WO-A2-91/06440
- DE-A1- 2 028 139
- DE-A1- 19 916 040
- DE-A1-102007 008 159
- DE-B4-102007 008 156
- ES-A1- 2 277 765
- FR-A1- 2 279 580

## Beschreibung

Die Erfindung betrifft eine Luftfederungseinrichtung zum Heben und Senken des Fahrzeugaufbaus von luftgefederten Fahrzeugen mit Niveauregelung, mit mindestens einer Niveauregelventileinheit, mindestens einer Fahrzeugachse zugeordneten Luftfederbälgen, die von einem mittelbar damit pneumatisch verbunden Vorratsluftbehälter speisbar sind, sowie mit einer Steuerventileinrichtung zur manuellen Niveaueinstellung des Fahrzeugaufbaus nach Maßgabe einer Handsteuereinheit unter Umgehung der Niveauregelventileinheit, umfassend ein Handbetätigungselement und eine Ventileinheit, wobei die Steuerventileinrichtung mindestens ein Sperrventil zum Be- und Entlüften der Luftfederbälge über die Niveauregelventileinheit, mindestens ein Belüftungsventil und mindestens ein Entlüftungsventil zum Be- und Entlüften der Luftfederbälge unter Umgehung der Niveauregelventileinheit aufweist,
Dabei kann die Luftfederungseinrichtung entweder ein-, zwei- oder quasi-zweikreisig ausgebildet sein.

Bei Luftfederungseinrichtungen mit Luftfederbälgen ist zusätzlich zum Niveauregelventil, welches das Niveau einer LKW- bzw. Anhängerplattform oder eines LKW- bzw. Anhängerrahmens in bekannter Weise auf einen konstanten Wert einregelt, eine manuell betätigbare Niveauregelventileinheit - oder auch Steuerventileinrichtung genannt - vorgesehen, mittels der von einer Bedienperson manuell und unter Umgehung des Niveauregelventils eine gewünschte Niveaulage der Anhängerplattform bzw. des Fahrzeugsaufbaus eingestellt werden kann. Dazu wird die Niveauregelventileinheit manuell in die Stellungen "Heben", "Senken" oder "Stop" gestellt. Dazu weist die Niveauregelventileinheit Handbetätigungsmittel auf, womit z. B. eine für ein Beladen des Fahrzeugs an einer Laderampe gewünschte Niveaulage eingestellt werden kann. Weiterhin muss eine Stellung "Fahrt" vorhanden sein, in welcher das Niveauregelventil wieder wirksam wird.

Es sind zahlreiche Lösungen von Luftfederungseinrichtungen mit Handbetätigungsmittel bekannt, bei denen die zuvor genannten vier Stellungen einstellbar sind.

Aus der DE10 2006 006 439 Algeht eine Verteilereinrichtung zur manuellen Veränderung der Niveaulage eines luftgefederten Fahrzeugs hervor. Die Ventileinrichtung weist ein Schiebeventil auf, das die Hebe- Senk- und Stop-Positionen durch Betätigung eines Handhebels realisiert und die Rückstellung des Handhebels in die Fahrt-Position durch Aufbringen einer Drehfederkraft verwirklicht. Nachteilig ist, dass die Kraft zur Betätigung des Handhebels sehr hoch ist, wodurch eine präzise Einstellung der Fahrzeughöhe erschwert wird.

Aus der DE 10 2006 017 890 B4 ist ein manuell betätigbares pneumatisches Steuerventil bekannt, bei dem die Sperr-, Be- und Entlüftungsventile als Sitzventile ausgebildet sind und direkt mechanisch angesteuert werden. Ein Nachteil ist, dass die dargestellten Großquerschnitt-Sitzventile, die zum schnellen Heben und Senken des Fahrzeugaufbaus benötigt werden, zu großen Abmessungen und hohem Gewicht der gesamten Vorrichtung führen.

Darüber hinaus geht aus der EP 2 263 892 A1 eine Schaltventileinheit zum Be- und Entlüften von Federbälgen hervor. Dabei ist die Betätigung von Sperr-, Be- und Entlüftungsventilen direkt mechanisch durch Handkraft, aber auch elektropneumatisch möglich. Nachteilig ist, dass bei abgekoppelten Anhängerfahrzeugen keine Elektrizitätsversorgung zur Verfügung steht und somit nur die direkte mechanische Betätigung mit den zuvor genannten Nachteilen möglich ist.

Des Weiteren geht aus der DE 10 2007 008 156 B4 eine Luftfederungseinrichtung hervor, die eine Niveauregelventileinheit - oder auch Steuerventileinrichtung genannt - aufweist. Die Niveauregelventileinheit steht mit einem Niveauregelventil, einer Steuereinheit und einer Handsteuereinheit in pneumatischer Verbindung, um Druckluft in oder aus Luftfederbälgen zum Heben und Senken einer Anhängerplattform zu speisen. Als Druckquelle dient ein Vorratsluftbehälter. Gemäß einem ersten Ausführungsbeispiel weist die Luftfedereinrichtung zwei Handbetätigungsmittel zum manuellen Ansteuern von pneumatisch betätigbaren Steuerventilen zum Be- und Entlüften der Luftfederbälge unter Umgehung des Niveauregelventils auf. Dabei können jedoch nur die Betriebszustände Heben, Senken und Parken realisiert werden. Der Betriebszustand Fahrt stellt sich selbsttätig über die Steuereinheit ein, sobald eine bestimmte Fahrgeschwindigkeit überschritten wird. Zur manuellen Einstellung des Betriebszustandes Fahrt ist gemäß einem weiteren Ausführungsbeispiel ein drittes Handbetätigungsmittel an der Handsteuereinheit vorgesehen. Dabei weist jedes Handbetätigungsmittel ein Ventilelement auf, das über eine jeweilige pneumatische Leitung mit dem Niveauregelventil in Verbindung steht und die Funktion Höhenbegrenzung auch bei manueller Höheneinstellung verwirklicht. Durch die Anzahl an Handbetätigungsmittel wird die Bedienfreundlichkeit gemindert. Ferner ist aufgrund der Anzahl an Ventilelementen und pneumatischen Leitungen, welche aus der Anzahl an Handbetätigungsmittel resultieren, der pneumatische Schaltkreis komplexer aufgebaut.

Die DE 10 2007 0081 56 B4 offenbart eine Luftfederungseinrichtung mit einer Ventileinheit zur Ansteuerung verschiedener Betriebszustände, welche auch eine manuelle Betätigung zur Erzielung dieser Betriebszustände ermöglicht. Hierfür ist die Steuerventileinrichtung mit einer manuellen Betätigung ausgestattet, deren mechanische Einzelheiten allerdings nicht weiter offenbart sind.

Die WO 2011/076302 A1 offenbart eine technische Lösung, bei der die mechanischen Betätigungsmittel einer Ventileinheit für eine Luftfederungseinrichtung über einen Schwenkhebel realisiert sind, der per Rasteinrichtung in verschiedene Schaltstellungen bringbar ist. Die verschiedenen Schaltstellungen werden per Federkraft arretiert.

Die gattungsgemäße ES 2 277 765 A1 offenbart eine technische Lösung für eine Luftfederungseinrichtung, bei welcher eine Ansteuereinheit unter Umgehung der im Normalbetrieb aktiven Niveauregelventileinheit zur manuellen Niveaueinstellung vorgesehen ist. Hierbei lässt sich ein Handbetätigungselement in vier Positionen überführen, um entsprechend vier verschiedene Betriebszustände der Luftfederungseinrichtung anzusteuern. Dabei kann das Handbetätigungselement schwenkend in zwei Ebenen betätigt werden, um hieran angekoppelte vier Stößelventile je nach Schaltposition zu betätigen.

### OFFENBARUNG DER ERFINDUNG

Es ist daher die Aufgabe der vorliegenden Erfindung eine Luftfederungseinrichtung zum manuellen Heben und Senken eines Fahrzeugaufbaus von luftgefederten Fahrzeugen mit Niveauregelung dahingehend weiterzuentwickeln, dass sowohl der pneumatische Schaltkreis vereinfacht wird als auch die Bedienfreundlichkeit mit besonderer Hinsicht auf eine feine und präzise Höheneinstellung erhöht wird.

Die Aufgabe wird ausgehend von einer Luftfederungseinrichtung gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß weist die Ventileinheit ein stationäres Element, ein auf dem stationären Element hin und her gleitenden Gleitelement und ein an dem Gleitelement zur Führung angeordnetes Führungselement auf, wobei über vier Positionen des Handbetätigungselements das mindestens eine Sperrventil, das mindestens eine Belüftungsventil und das mindestens eine Entlüftungsventil über jeweils eine damit verbundene pneumatische Leitung zur Einleitung eines von vier Betriebszuständen der Luftfederungseinrichtung pneumatisch ansteuert.

Mit anderen Worten nimmt die Position des einzigen Handbetätigungselements, welches vorzugsweise als Joystick ausgebildet ist, direkt Einfluss auf die Ventileinheit und verbindet somit die pneumatische Leitung, welche Druckluft vom Vorratsluftbehälter und/oder von den Luftfederbälgen führt, über die Ventileinheit mit der jeweiligen pneumatischen Leitung des jeweiligen Ventils. Das mindestens eine Sperrventil, das mindestens eine Belüftungsventil und das mindestens eine Entlüftungsventil sind allesamt pneumatisch ansteuerbar und als 2/2-Wegeventile ausgebildet, wobei die zuvor genannten Ventile schließen oder geschlossen bleiben, wenn der Steuerdruck des jeweiligen Ventils gleich oder größer ist als die Druckwerte auf den Arbeitsanschlüssen Eingang und Ausgang des jeweiligen Ventils. Die Handsteuereinheit steuert das mindestens eine Sperrventil, das mindestens eine Belüftungsventil und das mindestens eine Entlüftungsventil in allen vier Positionen an.

Dabei sind die Ventileinheit, insbesondere aber auch das stationäre Element und das Gleitelement aus einem keramischen Werkstoff ausgebildet. Dadurch wird nicht nur der Verschleiß herabgesetzt, sondern auch die Gleitfähigkeit verbessert. Das Führungselement kommt axial auf dem Gleitelement zur Anlage und umschließt dieses zumindest teilweise. Das Handbetätigungselement ist mit dem Gleitelement und dadurch mit dem Führungselement mechanisch verbunden, um auf die Stellung der Ventileinheit Einfluss zu nehmen und dadurch die vier unterschiedlichen Betriebszustände Fahre, Halten, Senken und Heben einzuleiten.

Es wird vorgeschlagen, dass eine Vorratsleitung einerseits mit dem Vorratsbehälter, andererseits mit den Luftfederbälgen durch je ein Rückschlagventil in Verbindung steht. Die Vorratsleitung steht somit über ein erstes Rückschlagventil mit dem Vorratsluftbehälter und über das zweite Rückschlagventil mit den Luftfederbälgen in Verbindung, wobei der Druck in Vorratsleitung stets dem höheren Druck zwischen Vorratsluftbehälter und Luftfederbälgen entsprich. Die Sperr-, Be- und Entlüftungsventile bleiben nämlich geschlossen auch wenn der Druck im Vorratsluftbehälter nicht ausreichend hoch ist. Dies dient als Sicherheitsmaßnahme. Mithin entsteht der Druck in der Vorratsleitung aus den Druck im Vorratsbehälter und/oder aus dem Druck in den Luftbälgen, wobei durch die zwei Rückschlagventile, immer der höhere Druck entnommen wird. Dieser Druck wird dann als Steuerdruck von der Ventileinheit ausgesteuert.

Vorzugsweise ist zumindest zum Be- und Entlüften der Luftfederbälge unter Umgehung der Niveauregelventileinheit jeweils wenigstens ein 2/2-Wegeventil vorgesehen. Besonders bevorzugt ist das wenigstens eine 2/2-Wegeventil als Membranventil ausgebildet. Vorteilhafterweise ist jedoch auch zum Be- und Entlüften der Luftfederbälge über die Niveauregelventileinheit ein als 2/2-Wegeventil ausgebildetes Membranventil vorgesehen. Mit anderen Worten sind jeweils ein Sperrventil, jeweils ein Belüftungsventil und jeweils ein Entlüftungsventil als Membranventil ausgebildet. Membranventile weisen einen vergrößerten Strömungsquerschnitt auf, wodurch ein schnelleres Be- und Entlüften der Luftfederbälge realisierbar ist.

Erfindungsgemäß ist das stationäre Element in einer Aussparung an mindestens einem Gehäuseteil der Handsteuereinheit fixiert, wobei das Gleitelement axial entlang einer ersten Achse bewegbar ist und zusammen mit dem Führungselement axial senkrecht dazu entlang einer zweiten Achse bewegbar ist. Die beiden Achsen liegen in einer Ebene, die zumindest annähernd senkrecht zum Handbetätigungselement ist. Auf einer Achse befinden sich dabei die Betriebszustände Heben, Halt und Senken, wobei sich auf der anderen Achse die Betriebszustände Halt und Fahren befinden. Mit anderen Worten ist die Position Halt auf beiden Achsen auffindbar, so dass von dieser Position aus die anderen drei Positionen angesteuert werden. Somit sind die vier Positionen in einer T-Form angeordnet und werden durch Betätigung des Handbetätigungsmittels angesteuert. Das Handbetätigungsmittel ist über einen Schaft mit dem Gleitelement und dadurch auch dem Führungselement verbunden. Dazu Weist der Schaft an einem distalen Ende ein Kugelgelenk auf, das durch eine Aussparung am Führungselement zumindest teilweise in das Gleitelement hineinragt. Über das Kugelgelenk wird das Führungselement und mittelbar auch das Gleitelement betätigt.

Die Erfindung schließt die technische Lehre ein, dass das Gleitelement in den vier Positionen durch Reibung und/oder zumindest ein Federelement und/oder zumindest ein Federelement und einem Gleitprofil fixierbar ist. Mit anderen Worten wird die eingelegte Position des Handbetätigungsmittels entweder durch Reibung zwischen Gleitelement und stationärem Element oder durch zumindest ein Federelement oder aber auch durch zumindest ein Gleitelement und ein Gleitprofil zwischen Gleitelement und stationärem Element realisiert. Eine Kombination dieser Möglichkeiten kann für den jeweiligen Anwendungsfall ebenfalls sinnvoll sein.

Gemäß einem bevorzugten Ausführungsbeispiel leitet ein vom Fahrzustand abhängiges pneumatisches Signal in einer mit der Handsteuereinheit in pneumatischer Verbindung stehenden Verbindungsleitung ohne manuellen Eingriff eine Verschiebung des Handbetätigungselements in eine Position Fahren ein. Dadurch wird die sogenannte Return-to-Ride Funktion ermöglicht, so dass automatisch ohne Eingriff des Fahrers vorzugsweise bei einer Überschreitung einer Grenzgeschwindigkeit von wenigen Km/h die Position Fahren des Handbetätigungselements eingenommen wird.

Gemäß einem weiteren bevorzugten Ausführungsbeispiel betätigt ein vom Fahrzustand abhängiges elektrisches Signal das in der Verbindungsleitung angeordnete Ventilelement, um über die Verbindungsleitung Druckluft in die Handsteuereinheit zu leiten, wodurch ohne manuellen Eingriff eine Verschiebung des Handbetätigungselements in die Position Fahren eingeleitet wird. Dabei ist das Ventilelement in der Lage elektrisch angesteuert zu werden, um aus einer Schließstellung in eine Öffnungsstellung überführt zu werden und so Druckluft durch die Verbindungsleitung zur Handsteuereinheit zu leiten, um die Handsteuereinheit in die Position Fahren zu überführen.

Dazu weist die Handsteuereinheit einen Zylinder mit einem darin axial auf und ab bewegbaren, auf einen Schaft des Handbetätigungselements einwirkenden Kolben auf, wobei der Kolben einerseits durch eine Druckfeder belastet ist und andererseits durch einen der Druckfeder entgegengesetzt wirkenden pneumatischen Druck belastbar ist. Der Kolben kann vorzugsweise über ein am Schaft ausgebildetes Betätigungselement in die Position Fahren gebracht werden. Dazu strömt Druckluft in den Zylinder ein und verschiebt den Kolben entgegen der Federkraft der Druckfeder. Die Druckfeder wird dabei gestaucht. Die axiale Bewegung des Kolbens betätigt über das Betätigungselement den Schaft und verschiebt diesen ohne manuellen Eingriff durch den Fahrer in die Position Fahren. Zur pneumatischen Trennung einer Druckluftkammer von einer Druckfederkammer weist der Kolben an einer Innenumfangsfläche als auch an einer Außenumfangsfläche jeweils ein Dichtungselement auf.

Besonders bevorzugt sind die Steuerventileinrichtung zusammen mit der Luftverteilungseinheit und/oder der Handsteuereinheit in einem gemeinsamen Gehäuse angeordnet. Das gemeinsame Gehäuse erlaubt einen kompakten Aufbau und verkürzt die zwischen der Steuerventileinrichtung, der Luftverteilungseinheit und der Handsteuereinheit angeordneten pneumatischen Leitungen. Ferner wird dadurch ermöglicht die pneumatischen Leitungen in Form von inneren Kanälen anstatt von Rohrverbindung auszubilden.

Gemäß einem weiteren bevorzugten Ausführungsbeispiel weist die Steuerventileinrichtung für eine zweikreisige oder quasi-zweikreisige Luftfederungseinrichtung zwei Sperrventile, zwei Belüftungsventile und zwei Entlüftungsventile auf, die als 2/2-Wegeventile ausgebildet sind. Zweikreisig bedeutet, dass die linksseitigen und die rechtsseitigen Luftfederbälge getrennt voneinander be- bzw. entlüftbar sind. Quasi-zweikreisig bedeutet, dass die Luftfederbälge der beiden Seiten bei manuellen Heben und Senken des Fahrzeuges separat be- und entlüftbar sind, aber auch in anderen Fahrzeugzuständen durch eine enge Drosselung der Luftströmung zusammengebunden sind. Je nachdem ob die Luftfederungseinrichtung ein- oder zweikreisig bzw. quasi-zweikreisig ausgebildet ist, variiert insbesondere die Anzahl der Sperrventile, Belüftungsventile und Entlüftungsventile.

### KURZE BESCHREIBUNG DER ZEICHNUNGEN

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
- Fig.1: ein schematisches Schaltbild einer erfindungsgemäßen quasi-zweikreisigen Luftfederungseinrichtung im Betriebszustand Fahren,
- Fig.2a: eine schematische Darstellung der vier Schaltstellungen der Ventileinheit aus Figur 1,
- Fig.2b: eine schematische Darstellung der vier Schaltstellungen der Ventileinheit gemäß einem weiteren Ausführungsbeispiel,
- Fig.3: eine schematische Schnittdarstellung eines Ausschnitts der erfindungsgemäßen Handsteuereinheit im Betriebszustand Halten, und
- Fig.4: eine perspektivische Schnittdarstellung eines Ausschnitts der erfindungsgemäßen Handsteuereinheit im Betriebszustand Fahren.

### DETAILLIERTE BESCHREIBUNG EINER BEVORZUGTEN AUSFÜHRUNGSFORM

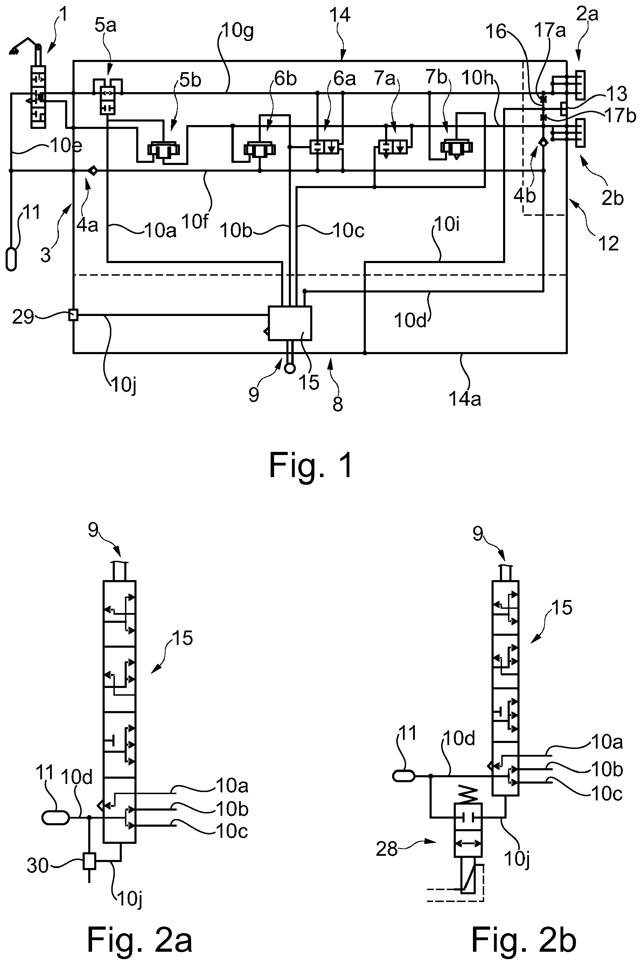

Gemäß Figur 1 weist die quasi-zweikreisige Luftfederungseinrichtung einen Vorratsluftbehälter 11 auf, der über eine pneumatische Leitung 10e mit einer Niveauregelventileinheit 1 pneumatisch verbunden ist. Eine Steuerventileinrichtung 3, umfassend zwei Sperrventile 5a, 5b, zwei Belüftungsventile 6a, 6b und zwei Entlüftungsventile 7a, 7b, ist der Niveauregelventileinheit 1 pneumatisch nachgeschaltet. Über eine an die Steuerventileinrichtung 3 angeordnete Luftverteilungseinheit 12 sind Luftfederbälge 2a, 2b, die an - hier nicht dargestellten - Fahrzeugachsen angeordnet sind, mittelbar über die Niveauregelventileinheit 1 und die Steuerventileinrichtung 3 mit dem Vorratsluftbehälter 11 pneumatisch verbunden. Quasi-zweikreisig bedeutet, dass die Luftfederbälge 2a, 2b bei manuellem Heben und Senken des Fahrzeuges durch separate Ventile be- und entlüftbar sind, aber durch eine enge Drosselung der Luftströmung in allen Positionen Fahrt, Halt, Heben und Senken zusammengebunden sind.

Die Steuerventileinrichtung 3 ist zur manuellen Niveaueinstellung des Fahrzeugaufbaus unter Umgehung der Niveauregelventileinheit 1 mit einer Handsteuereinheit 8, umfassend ein einziges Handbetätigungselement 9 und eine Ventileinheit 15, pneumatisch verbunden. Dazu sind pneumatische Leitungen 10a, 10b, 10c zwischen der Steuerventileinrichtung 3 und der Handsteuereinheit 8 ausgebildet, welche die Ventileinheit 15 mit jeweils den zwei Sperrventile 5a, 5b, jeweils den zwei Belüftungsventilen 6a, 6b und jeweils den zwei Entlüftungsventile 7a, 7b pneumatisch verbindet, wobei die Sperrventile 5a, 5b, die Belüftungsventile 6a, 6b und die Entlüftungsventile 7a, 7b als Membranventile ausgebildet sind.

Eine pneumatische Leitung 10d dient der Ventileinheit 15 als pneumatischer Eingang und verbindet diese mittelbar mit dem Vorratsluftbehälter 11 und/oder mit den Luftfederbälgen 2a, 2b durch die Rückschlagventile 4a, 4b. Die Steuerventileinrichtung 3 ist vorteilhafterweise zusammen mit der Luftverteilungseinheit 12 und der Handsteuereinheit 8 in einem gemeinsamen Gehäuse 14 angeordnet.

In dem dargestellten Betriebszustand Fahren befindet sich das Handbetätigungselement 9 in einer Position, in der die Handsteuereinheit 8 die Vorratsleitung 10füber die Ventileinheit 15 mit den Belüftungsventilen 6a, 6b und den Entlüftungsventil 7a, 7b über die jeweilige pneumatische Leitung 10b, 10c verbindet und die pneumatische Leitung 10a und damit die Steuerung der Sperrventil 5a, 5b entlüftet. Das Entlüften der pneumatischen Leitung 10a der Sperrventile 5a, 5b schaltet die Sperrventile 5a, 5b von der geschlossenen Position auf eine Durchflussposition um, wodurch die Niveauregelventileinheit 1 mit den Luftfederbälgen 2a, 2b pneumatisch verbunden wird. Mithin erfolgt ein Senken oder Heben des Fahrzeugaufbaus automatisch nach Maßgabe der Niveauregelventileinheit 1.

Die Luftverteilungseinheit 12 umfasst eine Verbindungsleitung 16, welche die rechts- und linksseitige Luftfederbälge 2a, 2b durch zwei Drosseln 17a, 17b verbindet. Zwischen den zwei Drosseln 17a, 17b bildet sich aus den Druckwerten in den rechts- und linksseitigen Luftfederbälgen 2a, 2b ein Druckmittelwert. Dieser Druckmittelwert wird einerseits durch den Steueranschluss 13 zu dem Bremssystem des Fahrzeuges EBS oder zu dem Bremssystem des Anhängers TEBS geleitet und dient als Achslastsignal. Andererseits wird es durch die Leitung 10i zu einem Testanschluss geleitet.

Die Handsteuereinheit 8 umfasst eine Verbindungsleitung 10j, die die Ventileinheit 15 mit einem Anschluss des Return-to-Ride-Signalgebers 29 verbindet. Darüber wird ein von dem Fahrzustand abhängiges Signal eingeleitet, um die Ventileinheit 15 ohne manuellen Eingriff in die Position Fahren zu schalten.

In den Figuren 2a und 2b sind die vier unterschiedlichen Positionen der Ventileinheit 15 dargestellt. Dargestellt ist die Position Fahren, die zuvor beschreiben wurde. Durch eine manuelle Betätigung des Handbetätigungselements 9 kann aus der Position Fahren in die Position Halten geschaltet werden. Im Betriebszustand Halten verbindet die Handsteuereinheit 8 die Vorratsleitung 10 f über die Ventileinheit 15 mit den Sperrventilen 5a, 5b sowie mit den Belüftungsventilen 6a, 6b und mit den Entlüftungsventilen 7a, 7b über die jeweilige pneumatische Leitung 10a, 10b, 10c.

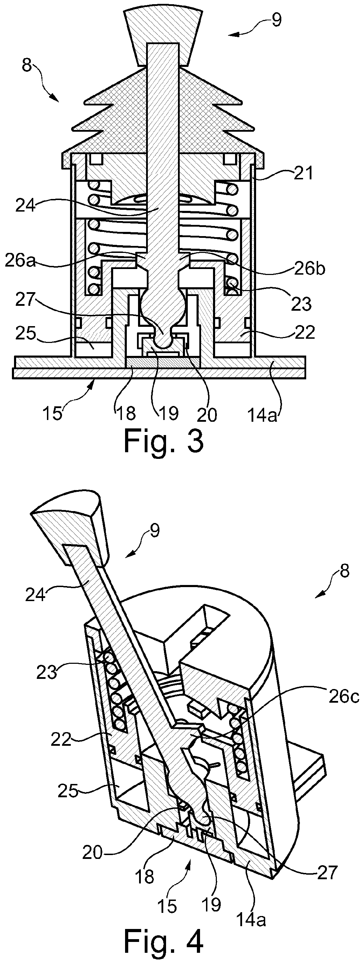

Aus den Figuren 2a und 2b ist nicht ersichtlich, dass aus der Position Halten entweder in die Position Heben oder in die Position Senken geschaltet werden kann. Dies ist aufgrund einer T-Anordnung der vier Positionen jedoch möglich. Die T-Anordnung wird jedoch aus Figur 4 ersichtlich.

Im Betriebszustand Senken verbindet die Handsteuereinheit 8 die Vorratsleitung 10f über die Ventileinheit 15 mit den Sperrventilen 5a, 5b und den Belüftungsventilen 6a, 6b über die jeweilige pneumatische Leitung 10a, 10b und die pneumatische Leitung 10c der Entlüftungsventile 7a, 7b wird entlüftet. Mithin wird der Fahrzeugaufbau durch Betätigung des Handbetätigungselements 9 unter Umgehung der Niveauregelventileinheit 1 manuell gesenkt.

Im Betriebszustand Heben verbindet die Handsteuereinheit 8 die Vorratsleitung 10f über die Ventileinheit 15 mit den Sperrventilen 5a, 5b und den Entlüftungsventilen 7a, 7b über die jeweilige pneumatische Leitung 10a, 10c und die pneumatische Leitung 10b der Belüftungsventile 6a, 6b wird entlüftet. Somit wird der Fahrzeugaufbau durch Betätigung des Handbetätigungselements 9 unter Umgehung der Niveauregelventileinheit 1 manuell gehoben.

Ein vom Fahrzustand abhängiges pneumatisches Signal wird über die Verbindungsleitung 10j an die Handsteuereinheit 8 geleitet, um ohne manuellen Eingriff eine Verschiebung des Handbetätigungselements 9 in die Position Fahren einzuleiten. Die Leitung 10j verbindet die Ventileinheit 15 mit dem Return-to-Ride-Signalgeber 30.

Gemäß Figur 2b betätigt ein vom Fahrzustand abhängiges elektrisches Signal ein in der Verbindungsleitung 10j angeordnetes Ventilelement 28, um über die Verbindungsleitung Druckluft in die Handsteuereinheit 8 zu leiten, wodurch ohne manuellen Eingriff eine Verschiebung des Handbetätigungselements in die Position Fahren eingeleitet wird. Die Ventileinheit 28 kann in der Steuerventileinrichtung 3integriert sein und elektrisch angesteuert werden. Es ist aber auch denkbar, dass die Ventileinheit 28 in einem anderen pneumatischen Gerät, wie beispielsweise dem Bremssteuergerät integriert ist und mit der Steuerventileinrichtung 3 pneumatisch verbunden wird.

In den Figuren 3 und 4 ist die Handsteuereinheit 8 dargestellt. Diese weist einen Zylinder 21 auf, der als Gehäuse 14a dient und einen Kolben 22 aufnimmt. Der Kolben 22 ist über eine Druckfeder 23 gespannt und in seiner unteren Position gehalten, so dass das Handbetätigungselement 9 frei in alle vier Positionen schaltbar ist. An einem oberen distalen Ende des Kolbens 22 befindet sich ein - aufgrund der Schnittdarstellung nur teilweise dargestellter - T-förmiger Durchbruch, welcher die Bewegung des Handbetätigungselements 9 begrenzt, wodurch das Handbetätigungselement 9 T-förmig zwischen den vier Positionen bewegbar ist.

Die Ventileinheit 15 weist ein stationäres Element 18, ein auf dem stationären Element 18 hin und her gleitenden Gleitelement 19 und ein an dem Gleitelement 19 zur Führung angeordnetes Führungselement 20 auf. Das stationäre Element 18 ist in einer Aussparung am Gehäuseteil 14a der Handsteuereinheit 8 fixiert. Das Gleitelement 19 ist axial entlang einer ersten Achse bewegbar und das Führungselement 20 ist axial senkrecht dazu entlang einer zweiten Achse bewegbar.

Über einen Schaft 24 ist das Handbetätigungselement 9 mit der Ventileinheit 15 mechanisch verbunden. Dazu weist der Schaft 24 an einem distalen Ende ein Kugelgelenk 27 auf, das durch eine Aussparung im Führungselement 20 in das Gleitelement 19 greift.

Nach Figur 4 führt das Einleiten eines vom Fahrzustand abhängigen Signals über die Verbindungsleitung 10j zu einer axialen Bewegung des Kolbens 22 entgegen der Kraft der Druckfeder 23. Dies wird durch die Einspeisung von Druckluft in eine Druckluftkammer 25 des Zylinders 21 erreicht. Der Schaft 24 weist ein Betätigungselemente 26a, 26b, 26c auf. Über das Betätigungselemente 26c wird der Kolben 22 bei einer axialen Bewegung das Handbetätigungselement 9 ohne manuellen Eingriff in die Position Fahren bewegt.

Der T-förmige Durchbruch an dem oberen distalen Ende des Kolbens 22 und die drei Betätigungselemente 26a, 26b, 26c sind derart ausgebildet, dass der Kolben 22 gegen die Federkraft nur dann axial hochfahren kann, wenn das Handbetätigungselement 9 in einer senkrechten Position ist, die dem Betriebszustand Fahren entspricht. Ferner sind die drei Betätigungselemente 26a, 26b, 26c derart ausgebildet, dass der Kolben 22 beim axialen Hochfahren zuerst die Höhe der beiden Betätigungselemente 26a, 26b erreicht. Dadurch wird das Handbetätigungselement 9 - und somit auch die Ventileinheit 15 - aus der eventuellen Heben- oder Senken-Position in die Halt-Position bewegt. Bei weiterer axialen Bewegung des Kolbens 22 wird das Betätigungselement 26c vom Kolben 22 betätigt und das Handbetätigungselement 9 - und somit auch die Ventileinheit 15 - von der Halt-Position in die Fahrt-Position überführt.

### Bezugszeichenliste

- 1: Niveauregelventileinheit
- 2a, 2b: Luftfederbälge
- 3: Steuerventileinrichtung
- 4a, 4b: Rückschlagventil
- 5a, 5b: Sperrventil
- 6a, 6b: Belüftungsventil
- 7a, 7b: Entlüftungsventil
- 8: Handsteuereinheit
- 9: Handbetätigungselement
- 10a-10j: pneumatische Leitung
- 11: Vorratsluftbehälter
- 12: Luftverteilungseinheit
- 13: Steuereinheit
- 14, 14a: Gehäuse
- 15: Ventileinheit
- 16: Verbindungsleitung
- 17a, 17b: Drossel
- 18: stationäres Element
- 19: Gleitelement
- 20: Führungselement
- 21: Zylinder
- 22: Kolben
- 23: Druckfeder
- 24: Schaft
- 25: Druckluftkammer
- 26a-26c: Betätigungselement
- 27: Kugelgelenk
- 28: Ventilelement
- 29: Anschluss des Return-to-Ride Signalgebers
- 30: Return-to-Ride Signalgeber

## Patentansprüche

1. Luftfederungseinrichtung zum Heben und Senken des Fahrzeugaufbaus von luftgefederten Fahrzeugen mit Niveauregelung, mit mindestens einer Niveauregelventileinheit (1), mindestens einer Fahrzeugachse zugeordneten Luftfederbälgen (2a, 2b), die von einem mittelbar damit pneumatisch verbunden Vorratsluftbehälter (11) speisbar sind, sowie mit einer Steuerventileinrichtung (3) zur manuellen Niveaueinstellung des Fahrzeugaufbaus nach Maßgabe einer Handsteuereinheit (8) unter Umgehung der Niveauregelventileinheit (1), umfassend ein Handbetätigungselement (9) und eine Ventileinheit (15), wobei die Steuerventileinrichtung (3) mindestens ein Sperrventil (5a) zum Be- und Entlüften der Luftfederbälge (2a, 2b) über die Niveauregelventileinheit (1), mindestens ein Belüftungsventil (6a) und mindestens ein Entlüftungsventil (7a) zum Be- und Entlüften der Luftfederbälge (2a, 2b) unter Umgehung der Niveauregelventileinheit (1) aufweist, wobei über vier Positionen des Handbetätigungselements (9) das mindestens eine Sperrventil (5a, 5b), das mindestens eine Belüftungsventil (6a, 6b) und das mindestens eine Entlüftungsventil (7a, 7b) über jeweils eine damit verbundene pneumatische Leitung (10a, 10b, 10c) zur Einleitung eines von vier Betriebszuständen der Luftfederungseinrichtung pneumatisch ansteuert,
**dadurch gekennzeichnet, dass** die Ventileinheit (15) ein auf einem stationären Element (18) hin und her gleitenden Gleitelement (19) und ein an dem Gleitelement (19) zur Führung angeordnetes Führungselement (20) aufweist, wobei das stationäre Element (18) in einer Aussparung an mindestens einem Gehäuseteil (14a) der Handsteuereinheit (8) fixiert ist, wobei das Gleitelement (19) axial entlang einer ersten Achse bewegbar ist und das Führungselement (20) axial senkrecht dazu entlang einer zweiten Achse bewegbar ist.

2. Luftfederungseinrichtung nach Anspruch 1,
**dadurch gekennzeichnet, dass** eine Vorratsleitung (10f) einerseits mit dem Vorratsluftbehälter (11), andererseits mit den Luftfederbälgen (2a, 2b) durch je ein Rückschlagventil (4a, 4b) in Verbindung steht.

3. Luftfederungseinrichtung nach Anspruch 1,
**dadurch gekennzeichnet, dass** zumindest zum Be- und Entlüften der Luftfederbälge (2a, 2b) unter Umgehung der Niveauregelventileinheit (1) jeweils wenigstens ein 2/2-Wegeventil (6a, 6b, 7a, 7b) vorgesehen ist.

4. Luftfederungseinrichtung nach Anspruch 1,
**dadurch gekennzeichnet, dass** das Gleitelement (19) in den vier Positionen durch Reibung und/oder zumindest ein Federelement und/oder zumindest ein Federelement und einem Gleitprofil fixierbar ist.

5. Luftfederungseinrichtung nach Anspruch 1,
**dadurch gekennzeichnet, dass** ein vom Fahrzustand abhängiges pneumatisches Signal in einer mit der Handsteuereinheit (8) in pneumatischer Verbindung stehenden Verbindungsleitung (10j) ohne manuellen Eingriff eine Verschiebung des Handbetätigungselements (9) in eine Position Fahren einleitet.

6. Luftfederungseinrichtung nach Anspruch 5,
**dadurch gekennzeichnet, dass** ein vom Fahrzustand abhängiges elektrisches Signal das in der Verbindungsleitung (10j) angeordnete Ventilelement (28) betätigt, um über die Verbindungsleitung (10j) Druckluft in die Handsteuereinheit (8) zu leiten, wodurch ohne manuellen Eingriff eine Verschiebung des Handbetätigungselements (9) in die Position Fahren eingeleitet wird.

7. Luftfederungseinrichtung nach Anspruch 1,
**dadurch gekennzeichnet, dass** die Handsteuereinheit (8) einen Zylinder (21) mit einem darin axial auf und ab bewegbaren, auf einen Schaft (24) des Handbetätigungselements (9) einwirkenden Kolben (22) aufweist, wobei der Kolben (22) einerseits durch eine Druckfeder (23) belastet ist und andererseits durch einen der Druckfeder (23) entgegengesetzt wirkenden pneumatischen Druck belastet ist.

8. Luftfederungseinrichtung nach Anspruch 1,
**dadurch gekennzeichnet, dass** die Steuerventileinrichtung (3) für eine einkreisige Luftfederungseinrichtung das Sperrventil (5a), das Belüftungsventil (6a) und mindestens ein Entlüftungsventil (7a) aufweist, die als 2/2-Wegeventile ausgebildet sind.

9. Luftfederungseinrichtung nach Anspruch 1;
**dadurch gekennzeichnet, dass** die Steuerventileinrichtung (3) für eine zweikreisige und/oder quasi-zweikreisige Luftfederungseinrichtung zwei Sperrventile (5a, 5b), zwei Belüftungsventile (6a, 6b) und zwei Entlüftungsventile (7a, 7b) aufweist, die als 2/2-Wegeventile ausgebildet sind.

## Claims

1. Pneumatic suspension device for raising and lowering the vehicle body of air-sprung vehicles with height-level regulation, having at least one level regulation valve unit (1), at least one air suspension bellows (2a, 2b) associated with a vehicle axle which can be supplied from an air reservoir container (11) pneumatically connected indirectly thereto, and with a control valve device (3) for the manual adjustment of the level of the vehicle body in accordance with a manual control element (8) while bypassing the level regulation valve unit (1), comprising a manual actuating element (9) and a valve unit (15), wherein the control valve device (3) comprises at least one shut-off valve (5a) for aerating and venting the air suspension bellows (2a, 2b) via the level regulation valve unit (1), and at least one aerating valve (6a) and at least one venting valve (7a) for aerating and venting the air suspension bellows (2a, 2b) while bypassing the level regulation valve unit (1), wherein by virtue of four positions of the manual actuating element (9) the at least one shut-off valve (5a, 5b), the at least one aerating valve (6a, 6b) and the at least one venting valve (7a, 7b) pneumatically controls in each case a respective pneumatic line (10a, 10b, 10c) connected thereto in order to initiate one of four operating conditions of the air suspension device, **characterised in that** the valve unit (15) comprises a sliding element (19) that slides to and fro on a stationary element (18) and a guiding element (20) arranged for guiding purposes on the sliding element (19), wherein the stationary element (18) is fixed in a recess on at least one housing component (14a) of the manual control unit (8), so that the sliding element (19) can move axially along a first axis and the guiding element (20) can move perpendicularly thereto along a second axis.

2. Pneumatic suspension device according to Claim 1,
**characterised in that** a reservoir line (10f) is connected on one side to the air reservoir container (11) and on the other side to the air suspension bellows (2a, 2b), in each case by a non-return valve (4a, 4b).

3. Pneumatic suspension device according to Claim 1,
**characterised in that** at least in order to aerate and vent the air suspension bellows (2a, 2b) while bypassing the level regulation valve unit (1), in each case at least one 2/2-way valve (6a, 6b, 7a, 7b) is provided.

4. Pneumatic suspension device according to Claim 1,
**characterised in that** the sliding element (19) can be fixed in the four positions by friction and/or by at least one spring element and/or by at least one spring element and a sliding profile.

5. Pneumatic suspension device according to Claim 1,
**characterised in that** a pneumatic signal that depends on the driving situation in a connection line (10j) pneumatically connected to the manual control unit (8) initiates a movement of the manual actuation element (9) to a drive position, without manual intervention.

6. Pneumatic suspension device according to Claim 5,
**characterised in that** an electrical signal that depends on the driving situation actuates the valve element (28) arranged in the connection line (10j), in order to pass compressed air via the connection line (10j) into the manual control unit (8), whereby, without manual intervention, a movement of the manual actuation element (9) to the drive position is initiated.

7. Pneumatic suspension device according to Claim 1,
**characterised in that** the manual control unit (8) comprises a cylinder (21) with a piston (22) that can move axially up and down in it, which acts upon a shaft (24) of the manual actuation element (9), wherein the piston (22) is loaded on one side by a compression spring (23) and on the other side by a pneumatic pressure in opposition to the compression spring (23).

8. Pneumatic suspension device according to Claim 1,
**characterised in that** the control valve device (3) for a single-circuit pneumatic suspension device comprises the shut-off valve (5a), the aeration valve (6a) and at least one venting valve (7a), which are in the form of 2/2-way valves.

9. Pneumatic suspension device according to Claim 1,
**characterised in that** the control valve device (3) for a two-circuit and/or quasi-two-circuit pneumatic suspension device comprises two shut-off valves (5a, 5b), two aeration valves (6a, 6b) and two venting valves (7a, 7b), which are in the form of 2/2-way valves.

## Revendications

1. Dispositif de suspension pneumatique pour lever et abaisser la caisse de véhicules à suspension pneumatique, comprenant un réglage de niveau, comprenant au moins une unité de vanne de réglage de niveau, au moins des soufflets (2a, 2b) à ressort pneumatique, qui sont associés à un essieu du véhicule et qui peuvent être alimentés par un réservoir (11) d'air, qui y est relié pneumatiquement indirectement, ainsi que comprenant un dispositif (3) de vanne de commande pour le réglage manuel de niveau de la caisse du véhicule en fonction d'une unité (8) de commande manuelle en contournant l'unité (1) de vanne de réglage de niveau, comprenant un élément (9) d'actionnement manuel et une unité (15) de vanne, le dispositif (3) de vanne de commande ayant au moins une vanne (5a) d'arrêt pour l'alimentation en air et la purge des soufflets (2a, 2b) à ressort pneumatique par l'unité (1) de vanne de réglage de niveau, au moins une vanne (6a) d'alimentation en air et au moins une vanne (7a) de purge pour l'alimentation en air et la purge des soufflets (2a, 2b) à ressort pneumatique en contournant l'unité (1) de réglage de niveau, dans lequel, par quatre positions de l'élément (9) d'actionnement manuel, la au moins une vanne (5a, 5b) d'arrêt, la au moins une vanne (6a, 6b) d'alimentation en air et la au moins une vanne (7a, 7b) de purge est commandée pneumatiquement par respectivement un conduit (10a, 10b, 10c) pneumatique qui y est relié pour donner l'un de quatre états de fonctionnement du dispositif de suspension pneumatique,
**caractérisé en ce que** l'unité (15) de vanne a un élément (19) coulissant allant et venant sur un élément (18) fixe et un élément (20) de guidage disposé sur l'élément (19) coulissant pour le guidage, l'élément (18) fixe étant immobilisé dans un évidement d'au moins une partie (14a) d'enveloppe de l'unité (8) de commande manuelle, l'élément (19) coulissant étant mobile axialement le long d'un premier axe et l'élément (20) de guidage étant mobile axialement, perpendiculairement à cela, le long d'un deuxième axe.

2. Dispositif de suspension pneumatique suivant la revendication 1,
**caractérisé en ce qu'**un conduit (10f) de réservoir communique, d'une part, avec le réservoir (11), d'autre part, avec les soufflets (2a, 2b) à ressort pneumatique par respectivement un clapet (4a, 4b) antiretour.

3. Dispositif de suspension pneumatique suivant la revendication 1,
**caractérisé en ce qu'**au moins pour l'alimentation en air et la purge des soufflets (2a, 2b) à ressort pneumatique en contournant l'unité (1) de vanne de réglage de niveau, il est prévu respectivement au moins une vanne (6a, 6b, 7a, 7b) à 2/2 voies.

4. Dispositif de suspension pneumatique suivant la revendication 1,
**caractérisé en ce que** l'élément (19) coulissant peut être immobilisé dans les quatre positions par frottement et/ou par au moins un élément de ressort et/ou par un élément de ressort et un profil de coulissement.

5. Dispositif de suspension pneumatique suivant la revendication 1,
**caractérisé en ce qu'**un signal pneumatique qui dépend de l'état de marche dans un conduit (10j) de liaison en liaison pneumatique avec l'unité (8) de commande manuelle fait commencer un déplacement de l'élément (9) d'actionnement manuel vers une position marche.

6. Dispositif de suspension pneumatique suivant la revendication 5,
**caractérisé en ce qu'**un signal électrique qui dépend de l'état de marche actionne l'élément (28) de vanne monté dans le conduit (10j) de liaison pour envoyer par le conduit (10j) de liaison de l'air comprimé dans l'unité (8) de commande manuelle, grâce à quoi, sans intervention manuelle, commence un déplacement de l'élément (9) d'actionnement manuel vers la position marche.

7. Dispositif de suspension pneumatique suivant la revendication 1,
**caractérisé en ce que** l'unité (8) de commande manuelle a un cylindre (21) ayant un piston (22) mobile axialement en aller et retour et agissant sur un fût (24) de l'élément (9) d'actionnement manuel, le piston (22) étant soumis, d'une part, à l'action d'un ressort (23) de compression et, d'autre part, à la pression pneumatique antagoniste de l'action du ressort (23) de compression.

8. Dispositif de suspension pneumatique suivant la revendication 1,
**caractérisé en ce que** le dispositif (3) de vanne de commande pour un dispositif de suspension pneumatique à un circuit a la vanne (5a) d'arrêt, la vanne (6a) d'alimentation en air et au moins une vanne (7a) de purge, qui sont constituées en vannes à 2/2 voies.

9. Dispositif de suspension pneumatique suivant la revendication 1,
**caractérisé en ce que** le dispositif (3) de vanne de commande pour un dispositif de suspension pneumatique à deux circuits et/ou à deux quasi-circuits a deux vannes (5a, 5b) d'arrêt, deux vannes (6a, 6b) d'alimentation en air et deux vannes (7a) de purge, qui sont constituées en vannes à 2/2 voies.
